Europäisches Patentamt

European Patent Office

Office européen des brevets

(11) Veröffentlichungsnummer: **0 341 399**
**A2**

(12) **EUROPÄISCHE PATENTANMELDUNG**

(21) Anmeldenummer: 89104886.0

(22) Anmeldetag: 18.03.89

(51) Int. Cl.⁴: **B60K 41/04**

(30) Priorität: 07.05.88 DE 3815625

(43) Veröffentlichungstag der Anmeldung:
15.11.89 Patentblatt 89/46

(84) Benannte Vertragsstaaten:
**AT BE CH DE ES FR GB GR IT LI LU NL SE**

(71) Anmelder: **KÖLNER-VERKEHRS-BETRIEBE
AKTIENGESELLSCHAFT**
**Scheidtweiler Strasse 38**
**D-5000 Köln 41(DE)**

(72) Erfinder: **Köhler, Hans, Dipl.-Ing.**
**Auf dem Rosenberg 46**
**D-5064 Rösrath 1(DE)**
Erfinder: **Grawert, Manfred**
**Koblenzer Strasse 72**
**D-5000 Köln(DE)**
Erfinder: **Meschede, Klaus, Dipl.-Ing.**
**Lindenthalgürtel 71**
**D-5000 Köln 41(DE)**

(74) Vertreter: **Koepsell, Helmut, Dipl.-Ing.**
**Mittelstrasse 7**
**D-5000 Köln 1(DE)**

(54) **Verfahren zur automatischen Vorgabe von Antriebsparametern im ein automatisches Getriebe aufweisenden Antriebsstrang eines Linienbusses sowie Einrichtung zur Durchführung des Verfahrens.**

㊗ Ein Verfahren zur automatischen Vorgabe von Antriebsparametern im ein automatisches Getriebe aufweisenden Antriebsstrang eines Linienbusses sowie eine Einrichtung zur Durchführung des Verfahrens. Gemäß einem vorgegebenen Steuerprogramm werden dem Antriebsstrang jeweils an vorgegebenen Punkten der Fahrstrecke automatisch Steuerparameter zur Festlegung der Höchstgeschwindigkeit (5) und/oder der maximalen Motorleistung (7) und/oder der Schaltpunkte (6) des automatischen Getriebes zugeführt. Diese Steuerparameter werden mittels eines Rechners (1) aus gespeicherten Werten ausgewählt. Die Auswahlkriterien werden dem Rechner (1) als Eingabewerte von einem Steuergerät (2) aus in Form von Signalen über die Liniennummer, die Fahrtrichtung und den Standort des Fahrzeugs und die Uhrzeit und von einem Gerät (3) zur Erfassung des Beladungszustandes aus in Form eines Signals über den Beladungszustand des Fahrzeugs zugeführt.

Fig. 1

Netzbezogene Daten

Fahrzeugbezogene Daten

Steuergerät

2

Linie Nr.

Fahrtrichtung

Standort

Uhrzeit

Erfassung

3

Beladungszustand

Türsteuerung

Linienprofil

Bordrechner

1

Vorgabe für

Höchstgeschwindigkeit

5

Motorleistung

7

Getriebeschaltprogramm

6

## Verfahren zur automatischen Vorgabe von Antriebsparametern im ein automatisches Getriebe aufweisenden Antriebsstrang eines Linienbusses sowie Einrichtung zur Durchführung des Verfahrens.

Die Erfindung betrifft ein Verfahren zur automatischen Vorgabe von Antriebsparametern im ein automatisches Getriebe aufweisenden Antriebsstrang eines Linienbusses sowie eine Einrichtung zur Durchführung des Verfahrens.

Der Antriebsstrang eines Linienbusses besteht im wesentlichen aus den Komponenten Motor, Getriebe und Antriebsachse. Eine sorgfältige Abstimmung dieser Komponenten hat neben anderen Faktoren, wie der Einwirkungen durch den Fahrer, die Topographie und die Witterung entscheidenden Einfluß auf den Kraftstoffverbrauch. Bei der konventionellen Ausrüstung der Fahrzeuge kann die Kombination von Motordrehmoment, Getriebeschaltpunkten und Hinterachsenübersetzung nur global für die jeweilige Region festgelegt sein. Diese Auslegung ist für viele Fahrstrecken und Betriebszustände des Liniennetzes nicht optimal. Es ist grundsätzlich möglich, durch entsprechende Anweisungen und Informationen den Fahrer dazu zu veranlassen, mit den gegebenen Möglichkeiten des Antriebsstranges seine Fahrweise optimal einzustellen, damit niedriger Kraftstoffverbrauch, niedrige Schadstoffemissionen und niedriger Verschleiß erreicht werden. Praktische Erfahrungen zeigen, daß gerade die Fahrer von Linienbussen, die sehr vielfältigen Anforderungen im Straßenverkehr, der Bedienung der Fahrgäste und der Einhaltung des Fahrplans ausgesetzt sind, diesen zusätzlichen Anforderungen nur in Ausnahmefällen gerecht werden können.

Der Erfindung liegt daher die Aufgabe zugrunde, ein Verfahren und eine Einrichtung zur Durchführung des Verfahrens der eingangs erwähnten Art zu schaffen, mit dem eine automatische Vorgabe von Antriebsparametern möglich ist, die vorher nach bestimmten Kriterien derart ausgewählt und zusammengestellt sind, daß bei Durchführung des Verfahrens während der Linienfahrt des Fahrzeugs Kraftstoffverbrauch, Schadstoffemission, Reifenverschleiß, Bremsbelag- und Bremstrommelver schleiß, sowie Motor- und Getriebeverschleiß erheblich reduziert werden und damit eine Optimalisierung der Wirkungsweise des Antriebsstranges erreicht wird.

Die Lösung dieser Aufgabe geschieht erfindungsgemäß mit einem Verfahren, das die Merkmale aus dem kennzeichnenden Teil des Patentanspruchs 1 aufweist. Vorteilhafte Weiterbildungen des erfindungsgemäßen Verfahrens sind in den Ansprüchen 2 bis 5 beschrieben.

Eine Einrichtung zur Durchführung des erfindungsgemäßen Verfahrens an einem Linienbus mit den Merkmalen aus dem Oberbegriff des Patentanspruchs 6 ist durch die Merkmale aus dem kennzeichnenden Teil des Patentanspruchs 6 gegeben.

Vorteilhafte Weiterbildungen dieser Einrichtung sind in den Patentansprüchen 7 bis 9 beschrieben.

Der Grundgedanke der Erfindung besteht darin, die Informationen über die einzuhaltende Höchstgeschwindigkeit, die maximale Motorleistung und die anzuwählenden Schaltpunkte des automatischen Getriebes, die für die vorgesehene Fahrstrecke entsprechend der Topographie, der Straßenart und des Straßenzustandes, der die Verkehrsdichte bestimmenden Uhrzeit und dem augenblicklichen Beladungszustand des Fahrzeugs im voraus festgelegt sind, dem Fahrer nicht in Form von Anweisungen zu über-mitteln, sondern dem Antriebsstrang direkt in Form von Steuerparametern zuzuführen, die automatisch aufgrund der obigen Kriterien aus vorher eingespeicherten Informationen ausgewählt werden, die teils fest vorgegeben sind und teils während der Fahrt durch Messung ermittelt werden.

Dadurch, daß die Vorgabe automatisch erfolgt, braucht der Fahrer beispielsweise nicht mehr darauf zu achten, in welchem Beladungszustand sein Fahrzeug sich befindet, ob die Zeit des Stoßverkehrs bereits begonnen hat und ob er nach der nächsten Haltestelle eine Schnellstraße oder eine enge Innenstadtstraße durchfährt. Er kann sich vielmehr auf die anderen, ihm zugewiesenen Aufgaben konzentrieren und die Werte für die Optimalisierung des Antriebsstranges seines Fahrzeuges werden in diesen automatisch eingegeben, so daß das Fahrzeug sich im Hinblick auf die Höchstgeschwindigkeit, die Motorleistung und die gewählten Schaltpunkte des Getriebes stets im optimalen Zustand befindet.

Bei einer bevorzugten Ausführungsform des erfindungsgemäßen Verfahrens und der erfindungsgemäßen Einrichtung geschieht die Auswahl der Steuerparameter durch einen an Bord des Fahrzeugs installierten Rechner, der als Digitalrechner ausgebildet sein kann. Prinzipiell kann hier aber auch ein Analog-Rechner, ein fest verdrahtetes Steuerprogramm oder dergleichen eingesetzt werden. Weiterhin ist es möglich, im Fahrzeug selbst nur ein Steuergerät zu installieren, das über Funk von einer zentralen Leitstelle aus ansteuerbar ist.

Im folgenden wird anhand der beigefügten Zeichnungen ein Ausführungsbeispiel für das erfindungsgemäße Verfahren und eine Einrichtung zur Durchführung dieses Verfahrens näher erläutert.

In den Zeichnungen zeigen:

Fig. 1 in einem Blockschaltbild das Grundprinzip eines Verfahrens zur automatischen Vorgabe von Antriebsparametern im Antriebsstrang eines Linienbusses sowie einer Einrichtung zur Durchführung des Verfahrens;

Fig. 2 in einem gegenüber Fig. 1 detaillierteren Blockschaltbild eine Einrichtung zur Durchführung des Verfahrens nach Fig. 1;

Fig. 3 in einem Flußdiagramm das Verfahren zur Erfassung des Beladungszustandes des Fahrzeugs.

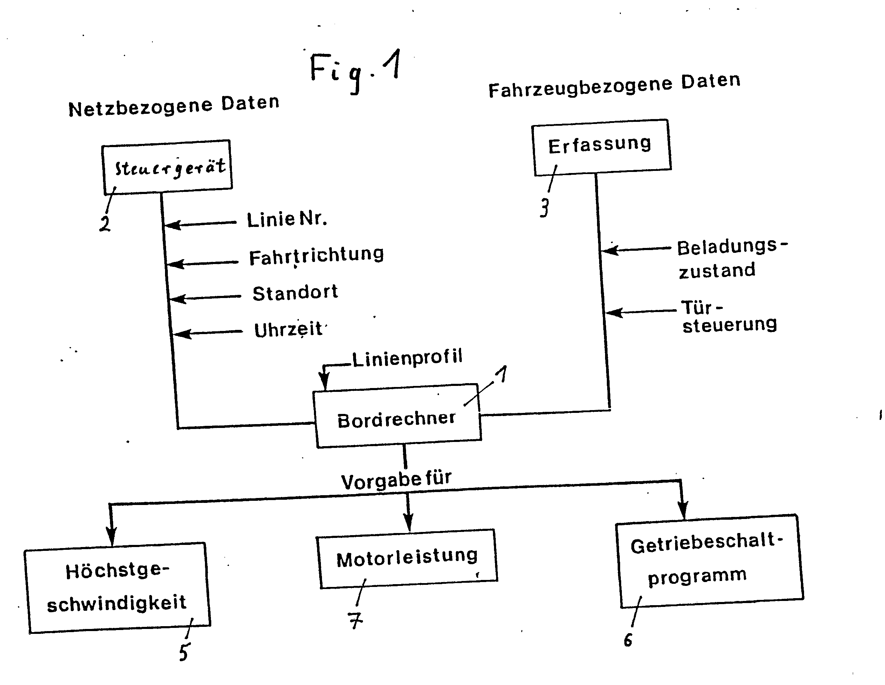

Es soll zunächst anhand von Fig. 1 das Grundprinzip eines Verfahrens zur automatischen Vorgabe von Steuerparametern zur Festlegung der Höchstgeschwindigkeit, der Motorleistung und der Schaltpunkte des automatischen Getriebes, gegeben durch ein bestimmtes Getriebeschaltprogramm, erläutert werden. Die Auswahl dieser Steuerparameter erfolgt durch einen im Fahrzeug installierten Bordrechner 1, in dessen Speicher die Werte für die möglichen Steuerparameter eingespeichert sind und in den weiterhin Informationen zur Auswahl dieser Steuerparameter nach einem vorgegebenen Programm eingegeben werden. Die Eingabewerte bestehen einerseits aus netzbezogenen Daten, die von einem Steuergerät 2 aus geliefert werden.

Derartige Steuergeräte sind an sich bekannt und finden in Linienbussen, beispielsweise zur Steuerung der Sichtanzeigen und der Entwerterautomaten, bereits Verwendung. Das Steuergerät 2 liefert an den Rechner 1 Informationen über die Nummer der Linie, die augenblickliche Fahrtrichtung auf der Fahrstrecke, den augenblicklichen Standort des Fahrzeugs, beispielsweise in Form von den einzelnen Haltestellen auf der Fahrtstrecke zugeordneten Ziffern und schließlich die augenblickliche Uhrzeit.

Weiterhin werden dem Rechner Informationen über das Linienprofil der Fahrstrecke zugeführt, die kennzeichnend sind für die Eigenschaften der sich an den jeweiligen Standort anschließenden Streckenabschnitte.

Andererseits werden dem Rechner fahrzeugbezogene Daten zugeführt, und zwar von einem Gerät 3 zur Erfassung des Beladungszustandes, das gekoppelt ist mit einer Einrichtung zur Feststellung des Öffnungs- oder Schließzustandes der Fahrzeugtüren. Der Beladungszustand des Fahrzeugs wird immer dann bestimmt, wenn an einer Haltestelle sämtliche Fahrzeugtüren kurz vor der Abfahrt geschlossen sind und somit keine Änderung des Beladungszustandes mehr eintreten kann.

Aus den oben erwähnten Eingabedaten ermittelt der Rechner die Steuerparameter, die er dann an ein elektrisch ansteuerbares Gerät 5 zur Begrenzung der Höchstgeschwindigkeit, ein elektrisch ansteuerbares automatisches Schaltgetriebe 6 und eine elektrisch ansteuerbare Vorrichtung 7 zur Begrenzung der Motorleistung abgibt.

Ein praktisches Beispiel hierfür wird weiter unten erläutert.

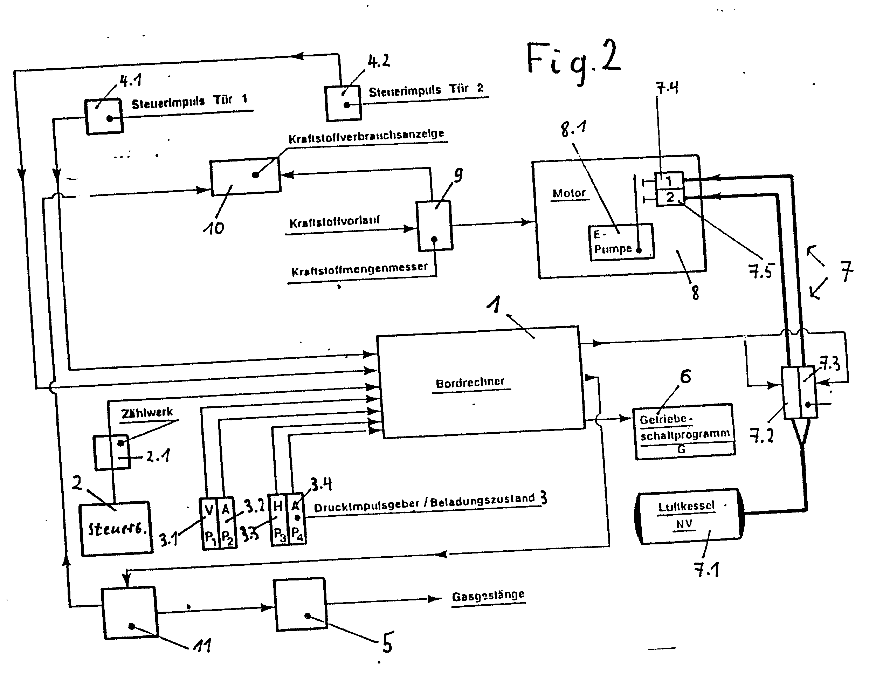

In Fig. 2 ist die Einrichtung zur Durchführung des oben erwähnten Verfahrens genauer dargestellt.

Das in Fig. 2 nicht dargestellte Fahrzeug besitzt einen schematisch angedeuteten Dieselmotor 8 mit einer Einspritzpumpe 8.1, ein automatisches Schaltgetriebe 6, dessen Schaltpunkte über ein elektrisch ansteuerbares Getriebeschaltprogramm einstellbar sind und einen elektrisch ansteuerbaren Geschwindigkeitsregler 5 zur Begrenzung der Höchstgeschwindigkeit, der mit dem Gasgestänge gekoppelt ist.

Die vom Rechner 1 gelieferten Ausgabewerte für die Steuerparameter werden über einen Fahrtschreiber 11 dem Geschwindigkeitsregler 5, dem automatischen Getriebe 6 und einer insgesamt mit Bezugsziffer 7 bezeichneten Vorrichtung zur Begrenzung der Einspritzmenge am Diesel motor und damit zur Begrenzung der Motorleistung zugeführt. Die Vorrichtung 7 ist eine elektropneumatische Vorrichtung mit einem Druckluftkessel 7.1, der über zwei Elektromagnetventile 7.2 und 7.3 mit pneumatisch betätigbaren Einrichtungen 7.4 und 7.5 zur Begrenzung des mechanischen Weges an der Einspritzpumpe über Endanschläge verbunden ist.

Die vom Rechner 1 abgegebenen Ausgabewerte werden den Steuereingängen der Elektromagnetventile 7.2 und 7.3 zugeführt.

Die Eingabewerte für den Rechner 1 werden einerseits von dem bereits beschriebenen Steuergerät 2 zusammen mit einem Zählwerk 2.1 und andererseits von dem ebenfalls bereits beschriebenen Gerät 3 zur Erfassung des Beladungszustandes geliefert. Weiterhin werden dem Rechner von den Geräten 4.1 und 4.2 zur Erfassung der Steuerimpulse für die Fahrzeugtüren entsprechende Signale zugeführt.

Das Gerät 3 zur Erfassung des Beladungszustandes besitzt jeweils in den Luftfederbälgen angeordnete Druckimpulsgeber 3.1 und 3.2 an der Vorderachse bzw. 3.3 und 3.4 an der Hinterachse. Diese Druckimpulsgeber sind auf unterschiedliche Drucke P1, P2 bzw. P3, P4 eingestellt.

Die Gesamteinrichtung wird vervollständigt durch einen Kraftstoffmengenmesser 9 und eine Kraftstoffverbrauchsanzeige 10.

Bevor die Funktionsweise der Einrichtung nach Fig. 2 an einem praktischen Ausführungsbeispiel erläutert wird, wird im folgenden die Auswertung der vom Druckimpulsgeber 3 dem Bordrechner zugeführ-

3

ten Eingabewerte und die Ermittlung des Beladungszustandes erläutert. Die vom Druckimpulsgeber 3 ausgehenden Eingabewerte werden nur ausgewertet, wenn von den Vorrichtungen 4.1 und 4.2 aus signalisiert wird, daß die Fahrzeugtüren geschlossen sind. Die Druckwerte P1 bis P4 seien folgendermaßen eingestellt:

| P1 | = | 3,1 | bar |
|----|---|-----|-----|
| P2 | = | 4,3 | bar |
| P3 | = | 3,7 | bar |
| P4 | = | 4,0 | bar. |

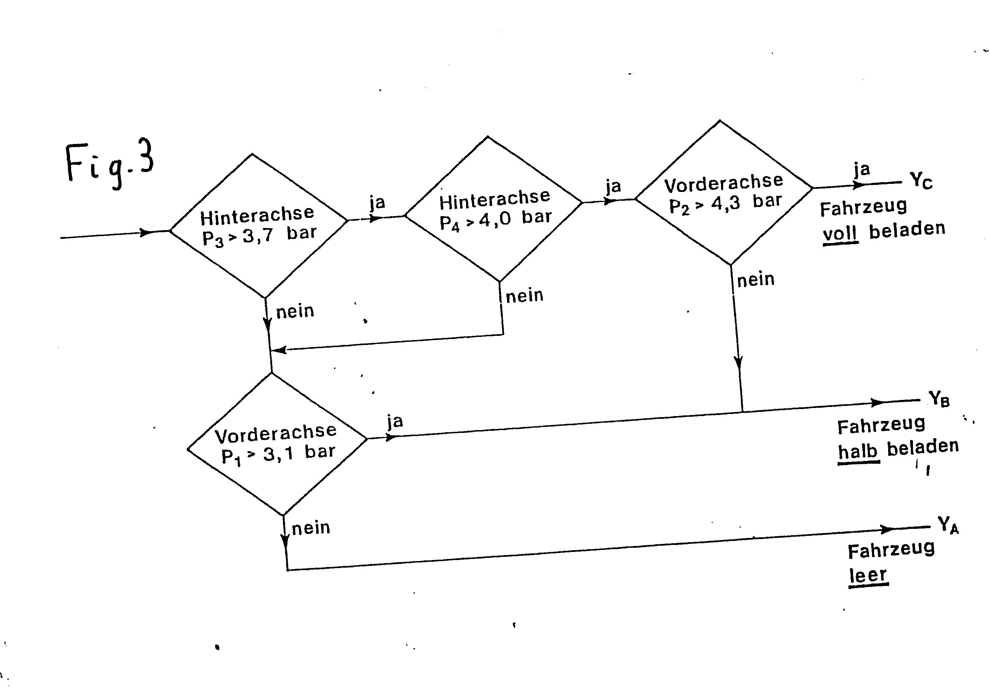

Die vier Druckimpulsgeber werden dann gemäß dem in Fig. 3 dargestellten Flußdiagramm abgefragt. Es ergeben sich aus Fig. 3 unmittelbar ablesbar drei unterschiedliche Beladungszustände, nämlich YA = Fahrzeug leer, YB = Fahrzeug halbbeladen und YC = Fahrzeug voll beladen. Diese drei Beladungswerte werden dem folgenden Auswahlverfahren zugrunde gelegt:

In dem folgenden praktischen Ausführungsbeispiel werden neben dem Beladungszustand dem Rechner noch folgende Werte eingegeben:

Ein Wert XL = 153 für die Liniennummer, ein Wert XF = I oder II für die Fahrtrichtung, ein Wert XU für die Uhrzeit, wobei vom Rechner lediglich festgestellt wird, ob die Uhrzeit innerhalb einer Schwachverkehrszeit SV oder innerhalb einer Hauptverkehrszeit HV liegt, und schließlich ein Wert XH, der den augenblicklichen Standort bzw. die Haltestelle des Fahrzeugs kennzeichnet, die mit Ziffern 1 bis 83 bezeichnet sind. Die mit den Werten für den Standort XH verknüpften Informationen für das Auswahlprogramm sind fest eingespeichert.

Weiterhin eingespeichert sind folgende Steuerparameter:
Drei Werte für die Höchstgeschwindigkeit V, nämlich:

| V1 | = | 55 | km/h |
|----|---|----|------|
| V2 | = | 65 | km/h |
| V3 | = | 80 | km/h. |

Drei Werte für die Motorleistung L, nämlich:

| L1 | = | 77% |
|----|---|-----|
| L2 | = | 88% |
| L3 | = | 100% |

Zwei Werte für ein Getriebeschaltprogramm G, nämlich:
G1 einem Schaltprogramm A, das als Sparprogramm ausgelegt ist,
G2 einem Schaltprogramm B, das als Leistungsprogramm ausgelegt ist.
Derartige Schaltgetriebe sind an sich bekannt.

In der Tabelle "Vorgabe-Steuerparameter" sind die bei Fahrten auf der gewählten Fahrstrecke mit der Liniennummer 153 in beiden Richtungen zu verschiedenen Tageszeiten und bei verschiedenen Beladungszuständen zusammengestellt.

In dieser Tabelle sind auch die Uhrzeitbereiche angegeben, in denen eine Schwachverkehrszeit SV oder eine Hauptverkehrszeit HV angenommen wird.

Aus der Tabelle ist ohne weiteres ablesbar, in welchen unterschiedlichen Bereichen sich die Vorgaben für die Steuerparameter bewegen.

So ist beispielsweise in der Fahrtrichtung XF = I sowohl in der Schwachverkehrszeit SV als auch in der Hauptverkehrszeit HV zwischen den Haltestellen 20 und 24 eine höhere Höchstgeschwindigkeit, nämlich V3 bzw. V2 möglich, weil die Fahrt zwischen diesen Haltestellen über eine Schnellstraße geht. Weiterhin sieht man sogleich, daß sich die Vorgaben für die Motorleistung stark am Beladungszustand des Fahrzeugs orientieren, während die vorgegebene Höchstgeschwindigkeit V und das Getriebeschaltprogramm G auch stark von der Uhrzeit bzw. den Größen SV und HV abhängig sind.

Tabelle

| Vorgabe - Steuerparameter | | | | | | | | | | |
|---|---|---|---|---|---|---|---|---|---|---|
| $X_L = 153$, $X_F = I$ | | | | | | | | | | |
| $X_U$ | $X_H$ | $Y_A$ | | | $Y_B$ | | | $Y_C$ | | |
| Uhrzeit | Haltestelle | $V_A$ | $L_A$ | $G_A$ | $V_B$ | $L_B$ | $G_B$ | $V_C$ | $L_C$ | $G_C$ |
| SV | 1-19 | $V_1$ | $L_1$ | $G_1$ | $V_1$ | $L_2$ | $G_1$ | $V_1$ | $L_3$ | $G_1$ |
| SV | 20-24 | $V_3$ | $L_1$ | $G_1$ | $V_3$ | $L_2$ | $G_1$ | $V_3$ | $L_3$ | $G_1$ |
| SV | 25-28 | $V_1$ | $L_1$ | $G_1$ | $V_1$ | $L_2$ | $G_1$ | $V_1$ | $L_3$ | $G_1$ |
| SV | 1,29 | $V_3$ | $L_1$ | $G_1$ | $V_3$ | $L_2$ | $G_1$ | $V_3$ | $L_3$ | $G_1$ |
| SV | 6,7,8,30,9 | $V_1$ | $L_1$ | $G_1$ | $V_1$ | $L_2$ | $G_1$ | $V_1$ | $L_3$ | $G_1$ |
| HV | 1-16 | $V_1$ | $L_1$ | $G_1$ | $V_1$ | $L_2$ | $G_1$ | $V_1$ | $L_3$ | $G_1$ |
| HV | 17-19 | $V_1$ | $L_1$ | $G_1$ | $V_1$ | $L_2$ | $G_1$ | $V_1$ | $L_3$ | $G_1$ |
| HV | 20-24 | $V_2$ | $L_1$ | $G_2$ | $V_2$ | $L_2$ | $G_2$ | $V_2$ | $L_3$ | $G_2$ |
| HV | 25-28 | $V_1$ | $L_1$ | $G_1$ | $V_1$ | $L_2$ | $G_1$ | $V_1$ | $L_3$ | $G_1$ |
| HV | 1,29 | $V_2$ | $L_3$ | $G_1$ | $V_2$ | $L_3$ | $G_2$ | $V_2$ | $L_3$ | $G_2$ |
| HV | 6,7,9,30,9 | $V_1$ | $L_1$ | $G_1$ | $V_1$ | $L_2$ | $G_2$ | $V_1$ | $L_3$ | $G_2$ |
| $X_L = 153$, $X_F = II$ | | | | | | | | | | |
| $X_U$ | $X_H$ | $Y_A$ | | | $Y_B$ | | | $Y_C$ | | |
| Uhrzeit | Haltestelle | $V_A$ | $L_A$ | $G_A$ | $V_B$ | $L_B$ | $G_B$ | $V_C$ | $L_C$ | $G_C$ |
| SV | 51-55 | $V_1$ | $L_1$ | $G_1$ | $V_1$ | $L_2$ | $G_1$ | $V_1$ | $L_3$ | $G_1$ |
| SV | 56-61 | $V_3$ | $L_1$ | $G_1$ | $V_3$ | $L_2$ | $G_1$ | $V_3$ | $L_3$ | $G_1$ |
| SV | 62-81 | $V_1$ | $L_1$ | $G_1$ | $V_1$ | $L_2$ | $G_1$ | $V_1$ | $L_3$ | $G_1$ |
| SV | 76,82,83,81 | $V_3$ | $L_1$ | $G_1$ | $V_3$ | $L_2$ | $G_1$ | $V_3$ | $L_3$ | $G_1$ |
| HV | 51-55 | $V_1$ | $L_1$ | $G_1$ | $V_1$ | $L_2$ | $G_1$ | $V_1$ | $L_3$ | $G_1$ |
| HV | · 56-61 | $V_2$ | $L_1$ | $G_2$ | $V_2$ | $L_2$ | $G_2$ | $V_2$ | $L_3$ | $G_2$ |
| HV | 62-65 | $V_1$ | $L_1$ | $G_1$ | $V_1$ | $L_2$ | $G_1$ | $V_1$ | $L_3$ | $G_1$ |
| HV | 66-81 | $V_1$ | $L_1$ | $G_1$ | $V_1$ | $L_2$ | $G_4$ | $V_1$ | $L_3$ | $G_1$ |
| HV | 76,82,83,81 | $V_2$ | $L_3$ | $G_1$ | $V_2$ | $L_2$ | $G_2$ | $V_2$ | $L_3$ | $G_2$ |
| SV: Schwachverkehrszeit: $4^{00}$-$7^{00}$, $9^{00}$-$12^{00}$, $13^{00}$-$16^{00}$, $19^{00}$-$1^{00}$ | | | | | | | | | | |
| HV: Hauptverkehrszeit : $7^{00}$-$9^{00}$, $12^{00}$-$13^{00}$, $16^{00}$,-$19^{00}$ | | | | | | | | | | |
| V: Höchstgeschwindigkeit: $V_1 = 55$km/h, $V_2 = 65$km/h, $V_3 = 80$ km/h | | | | | | | | | | |
| L: Motorleistung : $L_1 = 77\%$, $L_2 = 98\%$, $L_3 = 100\%$ | | | | | | | | | | |
| G: Getriebeschaftprogramm: $G_1$: Programm A; $G_2$: Programm B | | | | | | | | | | |

Bei dem beschriebenen praktischen Ausführungsbeispiel wurde ein Schaltgetriebe mit zwei anwählbaren Getriebeprogrammen eingesetzt. Selbstverständlich sind auch Getriebe mit einer größeren Anzahl von unterschiedlichen Getriebeprogrammen verwendbar, wodurch sich eine noch größere Auffächerung der Vorgaben ergibt. Bei den Getriebeprogrammen unterscheiden sich die Sparprogramme von den Leistungsprogrammen dadurch, daß beispielsweise beim Hochschalten im Sparprogramm die Schaltpunkte bereits bei niedrigeren Motordrehzahlen liegen.

Praktische Versuche haben gezeigt, daß bei der Durchführung des oben beschriebenen Verfahrens Kraftstoffeinsparungen von bis zu 20% und mehr erreichbar sind.

**Ansprüche**

1. Verfahren zur automatischen Vorgabe von Antriebsparametern im ein automatisches Getriebe aufweisenden Antriebsstrang eines Linienbusses, dadurch gekennzeichnet, daß gemäß einem vorgegebenen Steuerprogramm dem Antriebsstrang jeweils an vorgegebenen Punkten der Fahrstrecke automatisch Steuerparameter zur Festlegung der Höchstgeschwindigkeit (V1, V2, V3) und/oder der maximalen Motorleistung (L1, L2, L3) und/oder der Schaltpunkte (G1, G2) des automatischen Getriebes zugeführt werden, die in Abhängigkeit von der Uhrzeit (XU), dem Beladungszustand (YA,YB,YC) des Fahrzeugs und der Art (YH) des auf den vorgegebenen Punkt folgenden Fahrstreckenabschnittes aus gespeicherten Werten ausgewählt werden.

2. Verfahren nach Anspruch 1, dadurch gekennzeichnet, daß die Auswahl der Steuerparameter durch einen im Fahrzeug angeordneten Rechner erfolgt.

3. Verfahren nach Anspruch 2, dadurch gekennzeichnet, daß die vorgegebenen Punkte der Fahrstrecke an Haltestellen liegen.

4. Verfahren nach einem der Ansprüche 1 bis 3, gekennzeichnet durch je drei Steuerparameter für unterschiedliche Höchstgeschwindigkeit (V1, V2, V3) und unterschiedliche Motorleistungen (L1, L2, L3) und zwei bis vier Steuerparameter für unterschiedliche Getriebepro gramme (G1, G2), die in Abhängigkeit von Uhrzeitwerten aus Zeitabschnitten (SV, HV) mit zwei unterschiedlichen Bewertungen, drei unterschiedlichen Beladungswerten (YA, YB, YC) und drei bis zehn unterschiedlich bewerteten Fahrstreckenabschnitten (XH) ausgewählt werden.

5. Verfahren nach Anspruch 1, dadurch gekennzeichnet, daß die Auswahl der Steuerparameter durch eine im Fahrzeug angeordnete Steuervorrichtung erfolgt, die über Funk von einer zentralen Leitstelle aus ansteuerbar ist

6. Einrichtung zur Durchführung des Verfahren nach einem der Ansprüche 1 bis 4 an einem Linienbus, dessen Antriebsstrang einen Dieselmotor sowie ein automatisches Getriebe mit unterschiedlichen elektrisch ansteuerbaren Schaltprogrammen enthält und der mit einem elektrisch ansteuerbaren Geschwindigkeitsregler zur Begrenzung der Höchstgeschwindigkeit ausgerüstet ist, gekennzeichnet durch einen Rechner (1) mit Ein/Ausgabeeinheiten und einem Speicher, in dem die vorgegebenen Werte der Steuerparameter für den Antriebsstrang und die Vergleichswerte für Uhrzeit, Beladungszustand und Fahrstreckenabschnitt eingespeichert sind, sowie Vorrichtungen zur Erzeugung von Eingabewerten für den Rechner (1), nämlich ein Steuergerät (2) zur Abgabe von Signalwerten für die Liniennummer, die Fahrtrichtung und den Standort des Fahrzeugs, sowie für die Uhrzeit und ein Gerät (3) zur Erfassung des Beladungszustandes und zur Abgabe eines entsprechenden Signalwertes und Vorrichtungen zur Weiterleitung der Ausgabewerte des Rechners (1) an die Ansteuereingänge des Antriebsstranges, wobei zur Begrenzung der Motorleistung eine ansteuerbare Vorrichtung (7) zur Begrenzung der Einspritzmenge am Dieselmotor (8) dient.

7. Einrichtung nach Anspruch 6, dadurch gekennzeichnet, daß das Gerät (3) zur Erfassung des Beladungszustandes mit einer Vorrichtung (4.1, 4.2) zur Überwachung des Schließzustandes der Fahrzeugtüren gekoppelt ist und an den Federn des Fahrzeugs angeordnete Meßwertgeber (3.1 bis 3.4) aufweist, die jeweils bei Erreichen eines voreingestellten Meßwertes im geschlossenen Zustand aller Fahrzeugtüren einen Eingabewert für den Beladungszustand an den Rechner (1) abgeben.

8. Einrichtung nach Anspruch 7, dadurch gekennzeichnet, daß in den Luftfederbälgen an der Hinterachse und an der Vorderachse des Fahrzeugs je zwei Druckimpulsgeber (3.3, 3.4 bzw. 3.1, 3.2) angeordnet sind, die auf unterschiedliche Druckwerte eingestellt sind.

9. Einrichtung nach einem der Ansprüche 6 bis 8, dadurch gekennzeichnet, daß die Vorrichtung (7) zur Begrenzung der Einspritzmenge am Dieselmotor (8) eine pneumatisch betätigbare Einrichtung (7.4, 7.5) zur Begrenzung des mechanischen Weges an der Einspritzpumpe (8.1) über Endanschläge aufweist, deren Betätigung über vom Rechner (1) aus ansteuerbare Elektromagnetventile (7.2, 7.3) erfolgt.

Fig. 1

Netzbezogene Daten

Fahrzeugbezogene Daten

Steuergerät

2

Erfassung

3

Linie Nr.

Fahrtrichtung

Standort

Uhrzeit

Beladungszustand

Türsteuerung

Linienprofil

Bordrechner

1

Vorgabe für

Höchstgeschwindigkeit

5

Motorleistung

7

Getriebeschaltprogramm

6

EP 0 341 399 A2

Fig. 2

# Fig.3

EP 0 341 399 A2